# EUROPEAN PATENT SPECIFICATION

(11) **EP 4 415 151 B1**
(45) Date of publication and mention of the grant of the patent: **15.10.2025**
(21) Application number: 23824096.4
(22) Date of filing: 11.05.2023
(51) Int. Cl.: H01M 50/59, H01M 50/579, H01M 50/588, H01M 50/593, H01M 50/502, H01M 10/04, H01M 50/591, H01M 50/204, H01M 50/242, H01M 50/296, H01M 50/209, H01M 50/271, H01M 50/507

(54) **END PLATE ASSEMBLY AND BATTERY MODULE INCLUDING THE SAME**
ENDPLATTENANORDNUNG UND BATTERIEMODUL DAMIT
ENSEMBLE PLAQUE D'EXTRÉMITÉ ET MODULE DE BATTERIE LE COMPRENANT

(30) Priority: 16.06.2022 KR 20220073816; 11.04.2023 KR 20230047795
(43) Date of publication of application: 14.08.2024
(73) Proprietor: LG Energy Solution, Ltd., Seoul 07335 (KR)
(72) Inventor: LEE, Hyun Jae, Daejeon 34122 (KR); KIM, Ji Hwan, Daejeon 34122 (KR); KIM, Ji Hyung, Daejeon 34122 (KR); LEE, Dong Su, Daejeon 34122 (KR)
(74) Representative: Plasseraud IP
(86) International application number: PCT/KR2023/006441
(87) International publication number: WO 2023/243870

(56) References cited:
- JP-A- 2009 048 914
- KR-A- 20080 038 467
- KR-A- 20160 102 733
- KR-A- 20200 077 634
- KR-A- 20210 037 454
- KR-A- 20210 037 454
- KR-A- 20210 063 942
- US-A1- 2019 006 640
- US-A1- 2021 376 418
- US-A1- 2022 166 080

## Description

### TECHNICAL FIELD

The present invention relates to an end plate assembly and a battery module including the same.

### BACKGROUND ART

As the demand for solving the problem of environmental pollution caused by the abuse of petroleum resources and the demand for alternative energy sources to replace fossil energy increase, research and development on power generation based on Eco-friendly energy sources are being conducted. Particularly, researches on secondary batteries capable of being repeatedly chargeable/dischargeable are being actively conducted, and research/development on various aspects such as materials, structures, processes, and stability of secondary batteries are being conducted.

Secondary batteries may be managed in module units. For example, a plurality of secondary batteries may be mounted in a battery module in series/parallel arrangement and managed by a battery management system. There may be various arrangement/management examples according to the type or shape of the secondary battery. JP 2009 048914 discloses a battery pack. US 2019/006640, KR 2021 0037454 discloses a battery module.

In order to electrically connect the secondary batteries to each other, elements such as a bus bar or a connector may be exposed to the outside, and there is a need to protect the element from an external impact.

According to the prior art, it is difficult to absorb the impact from the outside through a plate defining outer peripheries of the secondary batteries, and thus, the internal elements may be damaged.

### DISCLOSURE OF THE INVENTION

### TECHNICAL PROBLEM

An object of the present invention for solving the above problem is to provide an end plate assembly capable of minimizing an external impact and improving structure stability, and a battery module including the same.

### TECHNICAL SOLUTION

An end plate assembly for a battery module and a battery module according to the invention are as defined in the appended claims.

### ADVANTAGEOUS EFFECTS

According to the preferred embodiment of the present invention, the external impact may be mitigated to improve the elements from being damaged.

According to the preferred embodiment of the present invention, the structural stability may be improved.

### BRIEF DESCRIPTION OF THE DRAWINGS

FIG. 1 is a perspective view of a battery module according to an embodiment of the present invention.
FIG. 2 is an exploded perspective view of an end plate assembly according to an embodiment of the present invention.
FIG. 3 is an enlarged cross-sectional view of a buffer part and an insulating cover according to an embodiment of the present invention.
FIG. 4 is a conceptual view illustrating impact absorption of the buffer part according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the present invention have been omitted, and in the present specification, reference symbols are added to components in each drawing. In this case, the same or similar reference numerals are assigned to the same or similar elements throughout the specification.

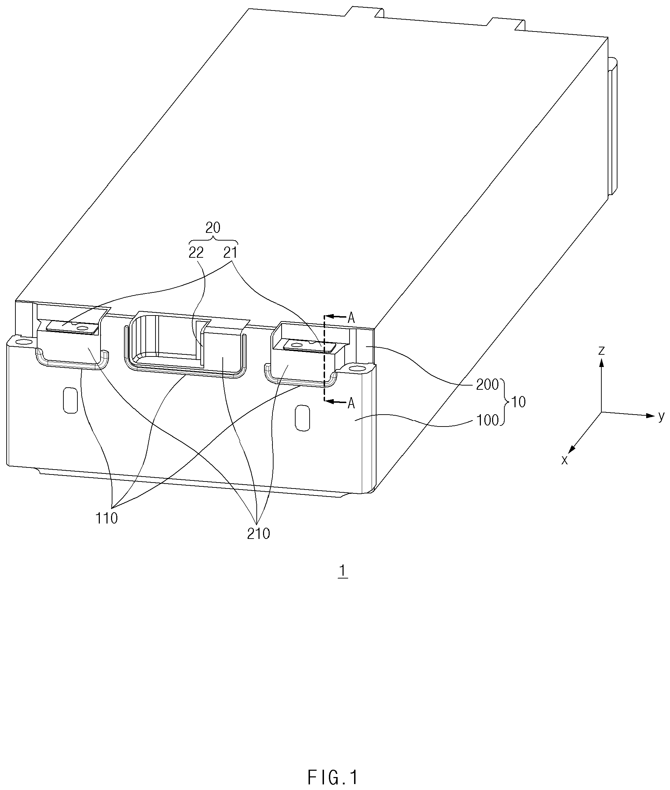

FIG. 1 is a perspective view of a battery module according to an embodiment of the present invention.

A battery module 1 includes a plurality of batteries. The plurality of batteries are secondary batteries.

The battery module 1 may include a frame 10. The frame 10 may define an outer periphery of the battery module 1 outside the plurality of batteries.

The battery module 1 includes elements 20. The elements 20 are electrically connected to the plurality of batteries. For example, the elements 20 may be disposed outside the plurality of batteries to electrically connect the outside of the battery module 1 to the plurality of batteries. The elements 20 may include a bus bar 21 and a connector 22.

The frame 10 includes an end plate 100.

The end plate 100 may be disposed outside the plurality of batteries. For example, referring to FIG. 1, the end plate 100 may be disposed on a predetermined plane (e.g., YZ plane) in a predetermined direction (e.g., X-axis direction) from the outside of the plurality of batteries to cover one side of each of the plurality of batteries.

The end plate 100 includes a buffer part 110. The end plate 100 has a buffer part 110 provided at an edge adjacent to the elements 20 electrically connected to the plurality of batteries. Particularly, for example, when viewed in the X-axis direction, the buffer part 110 may be disposed in a shape surrounding the elements 20. For another example, when viewed in the X-axis direction, the buffer part 110 may be provided in a shape surrounding the elements 20 by being spaced a predetermined distance from the elements 20.

The shape of the buffer part 110 is not particularly limited as described above and may be designed variously within a reasonable range of design changes in the above-described embodiment to protect the elements 20 from an external impact.

The buffer part 110 may include an elastic member. For example, the buffer part 110 may include the elastic member to effectively absorb and alleviate the external impact. However, it is not limited thereto, and there may not be particularly limited as long as the buffer part is a member capable of absorbing an impact.

The buffer part 110 protrudes toward the outside. For example, the buffer part 110 may protrude to a certain extent in the +X direction from the plurality of batteries.

The frame 10 may include an insulating cover 200.

The insulating cover 200 may be disposed between the plurality of batteries and the end plate 100. For example, the plurality of batteries, the insulating cover 200, and the end plate 100 may be sequentially arranged in the +X direction.

The insulating cover 200 includes an element cover part 210. The element cover part 210 may be a portion covering the elements 20 in the insulating cover 200. For example, the element cover part 210 may be disposed to cover at least a direction (e.g., a vertical direction) transverse to the X-axis direction based on the arrangement position of the elements 20. In other words, the element cover part 210 may be provided on a YZ plane to protect the elements 20 from an interference acting in the X-axis direction.

The buffer part 110 may be disposed along an edge of the element cover part 210. For example, the buffer part 110 may protrude in the X-axis direction from a portion corresponding to the edge of the element cover part 210.

As described above, as the buffer part 110 protrudes, the elements 20 may be protected from the external impact.

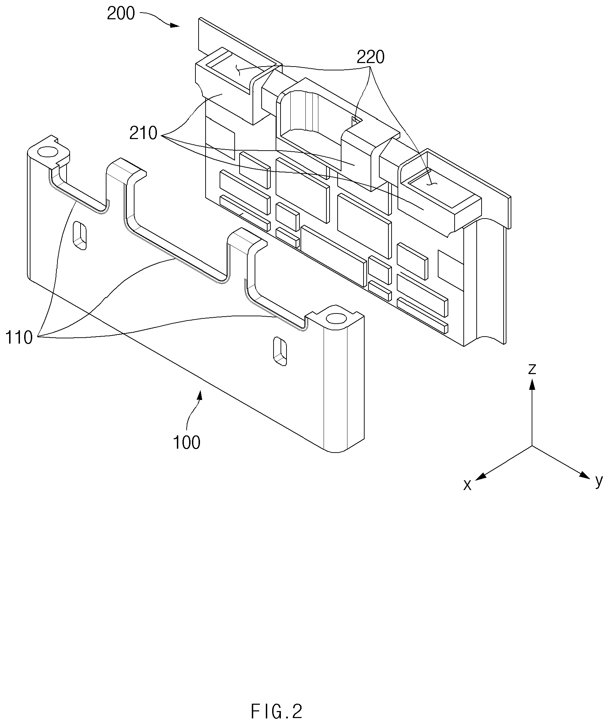

FIG. 2 is an exploded perspective view of an end plate assembly according to an embodiment of the present invention.

An opening 220 may be defined in the insulating cover 200. For example, the opening 220 may be opened toward a direction other than a direction toward the end plate 10. In other words, the opening 220 may be opened in a direction other than the direction toward the end plate 100 (e.g., the +X direction) so that the elements 20 and the external device are electrically connected to each other.

A portion of the insulating cover 200 is seated on the buffer part 110. Specifically, the element cover part 210 of the insulating cover 200 is seated on the buffer part 110 protruding outward. Thus, the sagging of the insulating cover 200 may be suppressed to improve structural stability.

The element cover part 210 may protrude outward so as to be seated on the buffer part 110.

The buffer part 110 may be provided discontinuously. For example, the buffer part 110 may be discontinuously provided at the edge of the end plate 100 at the side of each of the elements 20. As the buffer part 10 is provided discontinuously, an effect of impact absorption may be improved even with the minimum buffer part 110.

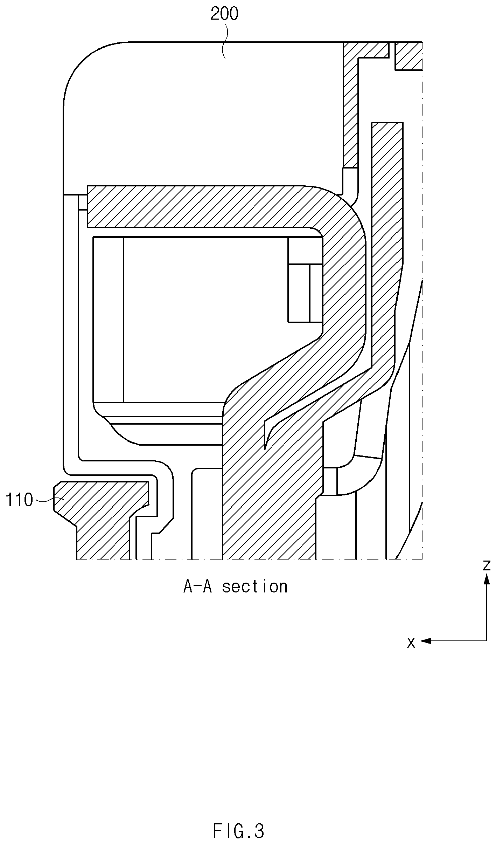

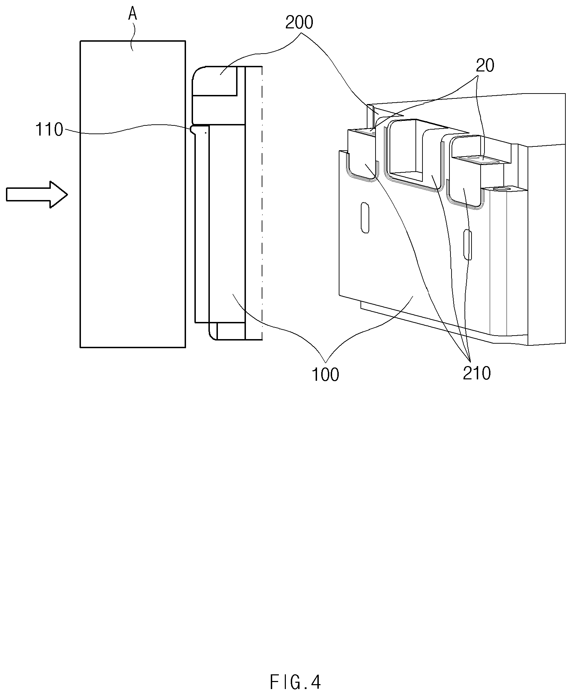

FIG. 3 is an enlarged cross-sectional view of the buffer part and the insulating cover according to an embodiment of the present invention, and FIG. 4 is a conceptual view illustrating impact absorption of the buffer part according to an embodiment of the present invention.

Referring to FIG. 3, the buffer part 110 may protrude more outward than the insulating cover 200. For example, a portion of the insulating cover 200 (e.g., the element cover part 210) also protrudes outward, but the buffer part 110 may protrude more in the +X direction than the insulating cover 200.

As described above, since the buffer part 110 further protrudes, when collision or contact with an external object A occurs, the buffer part 110 may preferentially collide or contact the external object A to absorb an impact.

The above-described collision or contact from the external object A may include pressurization by a cylinder or a jig. In addition, the collision or contact from the external object A may include an unexpected external impact.

The buffer part 110 may have a rib shape.

Referring to FIG. 4, the insulating cover 200 may perform an insulating function to prevent unintended electrical connection other than electrical connection through the elements 20 from occurring.

A portion of the insulating cover 200 is seated on the buffer part 110 protruding outward to realize structural stability, thereby securing reliability of the insulating function.

The buffer part 110 may support the element cover part 210 of the insulating cover 200. The buffer part 110 is disposed along the edge of the end plate 100, on which the element cover part 210 is seated, to support the element cover part 210.

The buffer part 110 may be discontinuously provided at a portion of the edge of the end plate 100 that supports the element cover part 210.

When the insulating cover 200 is supported by the buffer part 110, relative movement between the insulating cover 200 and the end plate 100 may be suppressed to improve the structural stability.

While the embodiments of the present invention have been described with reference to the specific embodiments, it will be apparent to those skilled in the art that various changes and modifications may be made without departing from the scope of the invention as defined in the following claims.

### [Description of the Symbols]

- 1:: Battery module
- 10:: Frame
- 20:: Elements
- 21:: Bus bar
- 22:: Connector
- 100:: Plate
- 110:: Buffer part
- 200:: Insulating cover
- 210:: Element cover part
- 220:: Opening

## Claims

1. An end plate assembly for a battery module (1) comprising a plurality of secondary batteries and elements (20) electrically connected to the plurality of secondary batteries, the end plate assembly comprising:
an insulating cover (200) configured to be disposed outside the plurality of secondary batteries and provided with an element cover part (210) configured to cover the elements (20) electrically connected to the plurality of secondary batteries; and
an end plate (100) disposed outside the insulating cover (200), the end plate assembly being **characterized in that** the end plate is provided with a buffer part (110) at an edge adjacent to the element cover part (210), and the element cover part (210) of the insulating cover (200) is seated on the buffer part (110) protruding outward.

2. The end plate assembly of claim 1, wherein the buffer part (110) further protrudes outward than the insulating cover (200).

3. A battery module (1) comprising:
a plurality of secondary batteries;
elements (20) that are electrically connected to the plurality of secondary batteries, and
an end plate assembly as defined in claim 1 or 2,
wherein
the insulating cover (200) is disposed outside the plurality of secondary batteries so that the insulating cover (200) is disposed between the secondary batteries and the end plate (100), and
the element cover part (210) covers the elements (20).

4. The battery module (1) of claim 3, wherein the insulating cover (200) has an opening (220) so that the elements (20) and an external device can be electrically connected to each other in a direction other than a direction toward the end plate (100).

5. The battery module (1) of claim 3, wherein the buffer part (110) is discontinuously provided at the edge.

6. The battery module (1) of claim 1, wherein the elements (20) comprise at least one of a bus bar (21) and a connector (22).

## Patentansprüche

1. Endplattenanordnung für ein Batteriemodul (1), umfassend eine Mehrzahl von Sekundärbatterien und Elemente (20), welche elektrisch mit der Mehrzahl von Sekundärbatterien verbunden sind, wobei die Endplattenanordnung umfasst:
eine Isolierungsabdeckung (200), welche dazu eingerichtet ist, außerhalb der Mehrzahl von Sekundärbatterien angeordnet und mit einem Elementabdeckungsteil (210) bereitgestellt zu sein, welches dazu eingerichtet ist, die Elemente (20) abzudecken, welche mit der Mehrzahl von Sekundärbatterien elektrisch verbunden sind; und
eine Endplatte (100), welche außerhalb der Isolierungsabdeckung (200) angeordnet ist, wobei die Endplattenanordnung **dadurch gekennzeichnet ist, dass** die Endplatte mit einem Pufferteil (110) an einem Rand bereitgestellt ist, welcher dem Elementabdeckungsteil (210) benachbart ist, und der Elementabdeckungsteil (210) der Isolationsabdeckung (200) an dem Pufferteil (110) sitzt, welcher nach außen vorsteht.

2. Endplattenanordnung nach Anspruch 1, wobei der Pufferteil (110) weiter nach außen vorsteht als die Isolationsabdeckung (200).

3. Batteriemodul (1), umfassend:
eine Mehrzahl von Sekundärbatterien;
Elemente (20), welche mit der Mehrzahl von Sekundärbatterien elektrisch verbunden sind; und
eine wie in Anspruch 1 oder 2 definierte Endplattenanordnung,
wobei die Isolierungsabdeckung (200) außerhalb der Mehrzahl von Sekundärbatterien angeordnet ist, sodass die Isolierungsabdeckung (200) zwischen den Sekundärbatterien und der Endplatte (100) angeordnet ist, und
der Elementabdeckungsteil (210) die Elemente (20) abdeckt.

4. Batteriemodul (1) nach Anspruch 3, wobei die Isolierungsabdeckung (200) eine Öffnung (220) aufweist, sodass die Elemente (20) und eine externe Vorrichtung in einer Richtung elektrisch miteinander verbunden sein können, welche verschieden zu einer Richtung ist, welche zu der Endplatte (100) gerichtet ist.

5. Batteriemodul (1) nach Anspruch 3, wobei der Pufferteil (110) an dem Rand unstetig bereitgestellt ist.

6. Batteriemodul (1) nach Anspruch 1, wobei die Elemente (20) wenigstens eines aus einer Sammelschiene (21) und einem Konnektor (22) umfassen.

## Revendications

1. Ensemble plaque d'extrémité pour un module de batterie (1) comprenant une pluralité de batteries secondaires et d'éléments (20) connectés électriquement à la pluralité de batteries secondaires, l'ensemble plaque d'extrémité comprenant :
un couvercle isolant (200) configuré pour être disposé à l'extérieur de la pluralité de batteries secondaires et pourvu d'une partie couvercle d'éléments (210) configurée pour recouvrir les éléments (20) connectés électriquement à la pluralité de batteries secondaires ; et
une plaque d'extrémité (100) disposée hors du couvercle isolant (200),
l'ensemble plaque d'extrémité étant **caractérisé en ce que** la plaque d'extrémité est pourvue d'une partie tampon (110) au niveau d'un bord adjacent à la partie couvercle d'éléments (210), et la partie couvercle d'éléments (210) du couvercle isolant (200) est installée sur la partie tampon (110) faisant saillie vers l'extérieur.

2. Ensemble plaque d'extrémité selon la revendication 1, dans lequel la partie tampon (110) fait davantage saillie vers l'extérieur que le couvercle isolant (200).

3. Module de batterie (1) comprenant :
une pluralité de batteries secondaires ;
des éléments (20) qui sont connectés électriquement à la pluralité de batteries secondaires, et
un ensemble plaque d'extrémité selon la revendication 1 ou 2, dans lequel
le couvercle isolant (200) est disposé hors de la pluralité de batteries secondaires de sorte que le couvercle isolant (200) soit disposé entre les batteries secondaires et la plaque d'extrémité (100), et
la partie couvercle d'éléments (210) recouvre les éléments (20).

4. Module de batterie (1) selon la revendication 3, dans lequel le couvercle isolant (200) a une ouverture (220) de sorte que les éléments (20) et un dispositif externe puissent être connectés électriquement les uns aux autres dans une direction autre qu'une direction vers la plaque d'extrémité (100).

5. Module de batterie (1) selon la revendication 3, dans lequel la partie tampon (110) est prévue de manière discontinue au niveau du bord.

6. Module de batterie (1) selon la revendication 1, dans lequel les éléments (20) comprennent au moins un parmi une barre omnibus (21) et un connecteur (22).
